# EUROPEAN PATENT SPECIFICATION

(11) **EP 2 247 465 B1**
(45) Date of publication and mention of the grant of the patent: **26.12.2012**
(21) Application number: 09705056.1
(22) Date of filing: 15.01.2009
(51) Int. Cl.: B60K 31/00, B60T 7/12, G08G 1/0967, B60W 30/14, B60W 50/00, B60T 7/18

(54) **METHOD, SYSTEM AND COMPUTER PROGRAM PRODUCT FOR AUTOMATED VEHICLE SPEED CONTROL**
VERFAHREN, SYSTEM UND COMPUTERPROGRAMMPRODUKT FÜR AUTOMATISIERTE FAHRZEUGGESCHWINDIGKEITSKONTROLLE
PROCÉDÉ, SYSTÈME ET PRODUIT DE PROGRAMME INFORMATIQUE POUR COMMANDE DE VITESSE DE VÉHICULE AUTOMATISÉE

(30) Priority: 28.01.2008 SE 0800201
(43) Date of publication of application: 10.11.2010
(73) Proprietor: Scania CV AB (publ), 151 87 Södertälje (SE)
(72) Inventor: AL ALAM, Assad, S-121 31 Enskededalen (SE); ANDERSSON, Jon, S-151 46 Södertälje (SE); SAHLHOLM, Per, S-141 45 Huddinge (SE)
(74) Representative: Thum, Bernhard
(86) International application number: PCT/SE2009/050030
(87) International publication number: WO 2009/096882

(56) References cited:
- EP-A2- 1 134 137
- EP-A2- 1 693 242
- DE-A1- 3 127 425
- DE-A1- 10 258 167
- FR-A1- 2 861 882
- US-A1- 2002 022 920
- US-A1- 2002 087 254
- US-A1- 2002 087 254
- US-A1- 2006 290 202
- US-A1- 2007 050 130

## Description

### TECHNICAL FIELD

The present invention relates to a method and a system for controlling the speed of a vehicle. In particular the present invention relates to a method and system for controlling the deceleration of a vehicle.

### BACKGROUND

Today more and more complex driving aid tools are built into motor vehicles such as cars and heavy vehicles including trucks and buses. For example, with the aid of modern positioning systems, such as Global Positioning System (GPS), in combination with maps including speed limits for different sections of a road, it is possible to aid the driver to select the correct speed.

US 2002/0022920 A1 discloses a device and a method for determining a legal speed limit as a function of positioning information and comparing the legal speed limit with a current speed. Further, the speed of the vehicle is adjusted for example is reduced with respect to the result of the comparison between the current speed and the legal speed limit.

US 2002/0087254 A1 discloses a method for determining whether a current speed of a vehicle is higher than an appropriate speed and calculating a deceleration time interval that it will take for a current speed of the vehicle to be decelerated to the appropriate speed. Further, the method comprises determining whether the current speed of the vehicle is equal to or smaller than the appropriate speed, and forcibly decelerating the vehicle to the appropriate speed if it is not.

To be able to select the correct speed the motor vehicle needs to perform accelerations and decelerations when the speed limit changes and also for other reasons. When speed is to be reduced because the speed limit is reduced, the motor vehicle needs to decelerate. In order to minimize fuel consumption the deceleration can be initiated at, in principle, any time. Such a speed control method can, while being fuel efficient, create other problems on the road. Such other problems include irritation from other drivers in vehicles following the decelerating vehicle on the road. Also, the driver driving the vehicle equipped with a speed control system initiating a deceleration at a position where it is not intuitive to perform a deceleration is likely to override the speed control system completely if the driver feels that the system creates more problems than it actually helps solving.

Hence, there exists a need for a method and a system that is capable of providing speed control that both aids in saving fuel and which also is intuitive for both the driver of the speed controlled vehicle and for drivers of surrounding vehicles.

### SUMMARY

It is an object of the present invention to provide a method and a system that is capable providing an intuitive speed control of a vehicle.

It is another object of the present invention to provide a method and a system that provides a deceleration of a vehicle that is fuel efficient and which at the same time is regarded as correct by surrounding traffic and the driver.

These objects and others are obtained by the method, system and computer program product as set out in the appended claims. Thus, in order to obtain a method of automated speed control of a motor vehicle that can provide a deceleration which is interpreted by the driver of the motor vehicle and surrounding traffic, the speed is reduced in response to a reduced speed, such as a reduced speed limit an upcoming curve or a upcoming blocked view, taking into account road conditions between a present position of the vehicle and a forward position where a lower speed is to be enforced and to the distance between the position where deceleration is initiated. Hereby it is ensured that deceleration is not commenced at a too early position that would be regarded as not intuitive by the driver and surrounding traffic. Also even though fuel consumption may not be completely optimized other parameters such as average speed will benefit from not allowing deceleration at a very long distance from a road section where a reduced speed is needed.

In accordance with one embodiment deceleration is allowed at a distance from the road segment with reduced speed that corresponds to the distance required for coasting of the vehicle on a level road to decelerate the vehicle to the reduced speed before reaching the road segment with reduced speed or a distance correlated to such a distance. This has been observed to be a distance that is regarded as intuitive by drivers. As an alternative or a supplemental distance a fixed distance and or a distance related to the current speed limit and or an upcoming speed limit may also be used. Other intuitive distances may also be used as long as they prevent deceleration at distance that would be regarded as unwarranted and or unexplainable by the driver if the vehicle or surrounding traffic.

The invention also extends to a system and computer program product adapted to implement the speed control method.

Using the method and system as described herein will provide a speed control system that is better adapted to existing driving patterns while at the same time making benefit of automated driving aid tools which have the benefit of improving fuel consumption and other parameters relating to engine performance.

### BRIEF DESCRIPTION OF THE DRAWINGS

The present invention will now be described in more detail by way of nonlimiting examples and with reference to the accompanying drawings, in which:
- Fig. 1 is a general view of a control system for a motor vehicle, and
- Fig. 2 is a flowchart illustrating steps performed when controlling the speed of a motor vehicle during deceleration.

### DETAILED DESCRIPTION

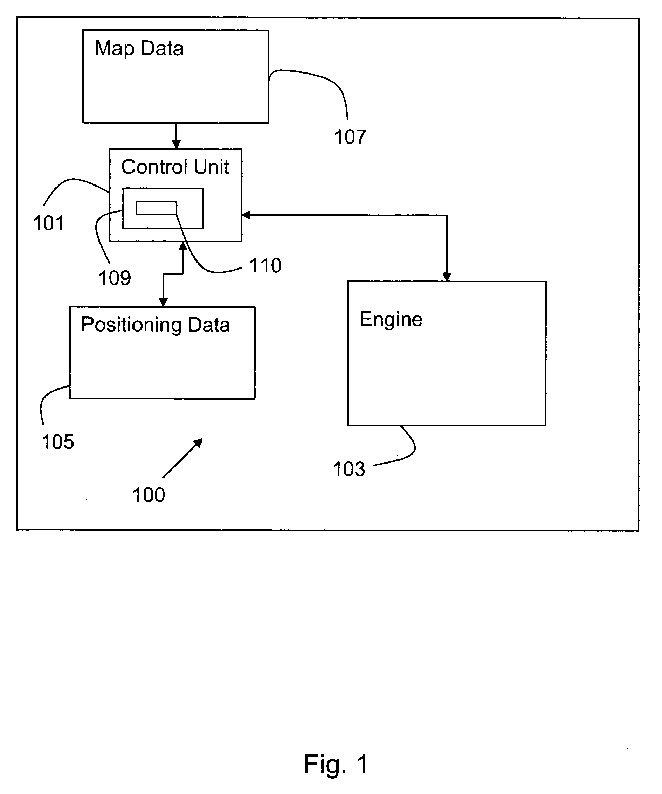

In Fig.1 a control system 100 for a motor vehicle is shown. The control system 100 comprises at least one control unit 101, for example an electronic control unit (ECU). The control unit 101 is adapted to receive sensor signals from different parts of the vehicle, such as the engine 103 including engine speed and other signal relating to the operation of the engine. The control unit 101 can further be in communication with and receive data from a data storage medium 105 relating to positioning of the vehicle from a positioning system, such as a Global Positioning System (GPS). Also the control unit 101 can receive map data 107 from a digital map. The map data preferably includes data regarding different speeds that should be adhered to at different road sections. For example the map data can include suitable speeds at different road sections taking into account parameters such as speed limit road curvature and sections having blocked view.

The control of the different parts and components of the vehicle is governed by pre-programmed instructions stored in the control unit. The pre-programmed instructions typically are in the form of a computer program product 110 stored on a digital storage medium 109 such as a Random Access Memory (RAM), flash, EPROM, EEPROM, or Read Only Memory (ROM) that is executed by the control unit. By changing the pre-programmed instructions the vehicle can be made to behave differently in a particular situation.

When controlling the speed of a vehicle by means of a predetermined automated control algorithm, it has been observed that if a deceleration is initiated very early problems may arise. Such problems relate, at least partly, to the fact that if a deceleration is regarded as unwarranted by the driver of a vehicle equipped with automated speed control, the driver may disregard the speed control system entirely or it may cause irritation from drivers of other vehicles because the deceleration is regarded as unwarranted.

In accordance with the present invention the system depicted in Fig. 1 is adapted, for example by programming the computer program product 110, to initiate a deceleration as a result of an upcoming speed limit reduction only if the distance to the speed limit reduction is within a predetermined distance.

By only allowing the speed control system to initiate a deceleration triggered by an upcoming speed limit reduction if the vehicle is within a predetermined distance from the road segment with reduced speed, the driver of the vehicle having the speed control system will regard the deceleration as warranted and believe that the speed control system operates correctly. If the distance is selected too far away from the road section where a reduced speed is to be enforced the deceleration will not be regarded as intuitive and the driver may believe that the system is malfunctioning and disengage the system. Also if a deceleration is regarded as unwarranted by surrounding traffic this may cause irritation among fellow drivers.

On the other hand if deceleration is triggered at a very late stage this will cause unnecessary fuel to be consumed as a result of the vehicle having to decelerate very quickly. Hence, the deceleration should be initiated as early as possible without being regarded as non-intuitive by a human.

It has been observed that a human is able to correctly initiate coasting to reduce speed for an upcoming speed limit if a vehicle is traveling on a level road. However, on an uphill or down hill road a human is usually not able to correctly initiate coasting at a correct location in response to an upcoming road section with reduced speed. One reason for this behavior may be that there are simply too many parameters to take into account for a human too be able to figure out when to initiate coasting.

In accordance with one embodiment of the present invention the maximum distance from an upcoming road segment with reduced speed when the speed control system may initiate a deceleration is set to the distance equal to the distance corresponding to if the road was level.

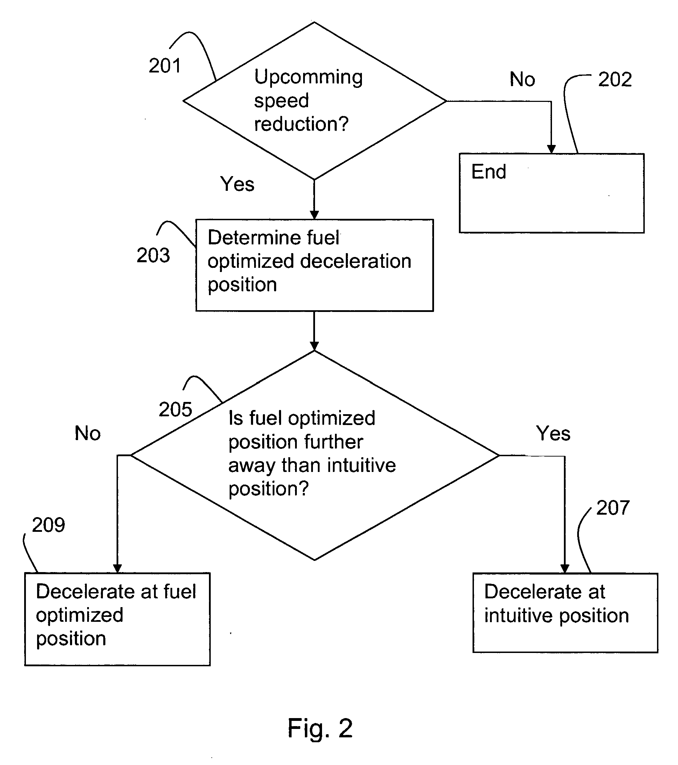

In Fig. 2 a flowchart illustrating some procedural steps performed when controlling the speed of a motor vehicle is shown. First in a step 201 it is checked if there is an upcoming road section with a reduced speed ahead for example due to a reduced speed limit or a curvature limitation or blocked view. If in step 201 it is determined that there is an upcoming road section with a reduced speed ahead the procedure continues to a step 203 else the procedure ends in a step 202.

In step 203 the most fuel efficient position to initiate deceleration is determined. Next in a step 205 an earliest allowed position where deceleration can be initiated is determined. The earliest position may be determined in any suitable manner that generates an intuitive position. It may be a fixed distance, such as 300 meters, or a distance correlated to the current speed limit or a distance correlated to both the current speed limit and the upcoming, lower, speed limit or similar.

In particular the position may be determined to correspond to the position where coasting would be initiated if the road was level from the position where the vehicle is now and the position where the reduced speed is to be enforced or a position correlated to this distance. The intuitive position may also be determined based on a combined distance from more than one calculated distance. For example the intuitive position may be determined to be the shortest of a fixed distance of for example 800 meters and the position corresponding to coasting on a level road.

The earliest allowed position which can be referred to as the intuitive position is then invoked as a pre-condition for initiating deceleration. Hence, deceleration cannot be initiated until the pre-condition determined in step 205 is fulfillled. If the position determined in step 203 is reached earlier by the vehicle than the position determined in step 205, the deceleration is postponed until the vehicle reaches the position determined in step 205 in a step 207. If the position determined in step 203 is not reached earlier by the vehicle than the position determined in step 205, the deceleration is initiated in at the position determined in step 203 in a step 209.

Using the method and system as described herein will provide an improved speed control of a motor vehicle. The method and system will provide a speed control that is in line with existing driving patterns and which at the same time enables fuel efficient driving.

## Claims

1. A method of automated speed control of a motor vehicle during deceleration when the speed is reduced in response to an upcoming reduced speed, the method comprising the step of determining (203) a first position where to initiate deceleration in response to road conditions between a present position of the vehicle and a forward second position where a lower speed is to be enforced, **characterized by** the step of:
- changing (207) the first position where deceleration is initiated to a third position closer to the second position if the first position is further away from the second position than a predetermined distance.

2. The method according to claim 1, **characterized in that** the third position is a position corresponding to a position correlated to where coasting of the vehicle on a level road would decelerate the vehicle to the reduced speed before reaching the second position.

3. The method according to any of claims 1 or 2, **characterized in that** the third position is a position located a fixed distance from the second position.

4. The method according to any of claims 1 - 3, **characterized in that** the third position is a position located a distance related to the current speed limit or speed of the vehicle.

5. The method according to any of claims 1 - 4, **characterized in that** the third position is a position located a distance related to the upcoming reduced speed limit.

6. The method according to any of claims 1 - 5, **characterized in that** the reduced speed is due to a reduced speed limit or a road curvature or a blocked view.

7. A system (100) for automated speed control of a motor vehicle during deceleration, the system comprising means (101) for determining a first position where to initiate deceleration in response to road conditions between a present position of the vehicle and a forward second position where a lower speed is to be enforced, **characterized by:**
- means (101) for changing the first position where deceleration is initiated to a third position closer to the second position if the first position is further away from the second position than a predetermined distance.

8. The system according to claim 7, **characterized by** means for determining the third position as a position corresponding to a position correlated to where coasting of the vehicle on a level road would decelerate the vehicle to the reduced speed before reaching the second position.

9. The system according to any of claims 7 or 8, **characterized by** means for determining that the third position is a position located a fixed distance from the second position.

10. The system according to any of claims 7 - 9, **characterized by** means for determining that the third position is a position located a distance related to the current speed limit or speed of the vehicle.

11. The system according to any of claims 7 - 10, **characterized by** means for determining that the third position is a position located a distance related to the upcoming reduced speed limit.

12. The system according to any of claims 7 - 11, **characterized in that** the reduced speed is due to a reduced speed limit or a road curvature or a blocked view.

13. A computer program product (110) comprising computer program segments for enabling automated speed control of a motor vehicle during deceleration when the speed is reduced in response to an upcoming reduced speed that when executed on a computer causes the computer to execute the step of determining a first position where to initiate deceleration in response to road conditions between a present position of the vehicle and a forward second position where a lower speed is to be enforced, **characterized in that** the computer program product further comprises computer program segments for causing the computer to execute the step of:
- changing the first position where deceleration is initiated to a third position closer to the second position if the first position is further away from the second position than a predetermined distance.

14. The computer program product according to claim 13, **characterized in that** the third position is a position corresponding to a position correlated to where coasting of the vehicle on a level road would decelerate the vehicle to the reduced speed before reaching the second position.

15. The computer program product according to any of claims 13 or 14, **characterized in that** the third position is a position located a fixed distance from the second position.

16. The computer program product according to any of claims 13 - 15, **characterized in that** the third position is a position located a distance related to the current speed limit or speed of the vehicle.

17. The computer program product according to any of claims 13 - 16, **characterized in that** the third position is a position located a distance related to the upcoming reduced speed limit.

18. The computer program product according to any of claims 13 - 17, **characterized in that** the reduced speed is due to a reduced speed limit or a road curvature or a blocked view.

## Patentansprüche

1. Verfahren der automatischen Geschwindigkeitssteuerung eines Kraftfahrzeugs während eines Abbremsens, bei der die Geschwindigkeit in Reaktion auf eine bevorstehende reduzierte Geschwindigkeit reduziert wird, wobei das Verfahren einen Schritt zur Ermittlung (203) einer ersten Position umfasst, an der ein Abbremsen zu initiieren ist, in Reaktion auf Straßenverhältnisse zwischen einer gegenwärtigen Position des Fahrzeugs und einer vorausliegenden zweiten Position, bei der eine geringere Geschwindigkeit zu erreichen ist,
**gekennzeichnet durch** den Schritt des Wechselns (207) der ersten Position, an der ein Abbremsen initiiert wird, zu einer dritten Position, die näher an der zweiten Position liegt, wenn die erste Position von der zweiten Position weiter entfernt liegt, als eine vorbestimmte Entfernung.

2. Verfahren nach Anspruch 1,
**dadurch gekennzeichnet, dass** die dritte Position einer Position entspricht, korrelierend zu der Position, von welcher an ein Ausrollen des Fahrzeugs auf einer ebenen Straße das Fahrzeug auf die reduzierte Geschwindigkeit abbremsen würde, bevor die zweite Position erreicht wird.

3. Verfahren nach einem der Ansprüche 1 oder 2,
**dadurch gekennzeichnet, dass** die dritte Position eine Position ist, die in einer festen Entfernung zur zweiten Position liegt.

4. Verfahren nach einem der Ansprüche 1 bis 3,
**dadurch gekennzeichnet, dass** die dritte Position eine Position ist, die in einer Entfernung liegt, die zu der aktuellen Höchstgeschwindigkeit oder der aktuellen Geschwindigkeit des Fahrzeuges in Bezug steht.

5. Verfahren nach einem der Ansprüche 1 bis 4,
**dadurch gekennzeichnet, dass** die dritte Position eine Position ist, die in einer Entfernung liegt, die zu einer bevorstehenden reduzierten Höchstgeschwindigkeit in Bezug steht.

6. Verfahren nach einem der Ansprüche 1 bis 5,
**dadurch gekennzeichnet, dass** die reduzierte Geschwindigkeit aus einer reduzierten Höchstgeschwindigkeit oder einer Straßenkrümmung oder einer versperrten Sicht resultiert.

7. System (100) für eine automatische Geschwindigkeitssteuerung eines Kraftfahrzeugs während eines Abbremsens, wobei das System Mittel (101) zum Ermitteln einer ersten Position umfasst, an der ein Abbremsen zu initiieren ist, in Reaktion auf Straßenverhältnisse zwischen einer gegenwärtigen Position des Fahrzeugs und einer vorausliegenden zweiten Position, bei der eine geringere Geschwindigkeit zu erreichen ist,
**gekennzeichnet durch** Mittel (101) zum Wechseln der ersten Position, an der ein Abbremsen initiiert wird, zu einer dritten Position, die näher an der zweiten Position liegt, wenn die erste Position von der zweiten Position weiter entfernt liegt, als eine vorbestimmte Entfernung.

8. Verfahren nach Anspruch 7,
**gekennzeichnet durch** Mittel zum Festlegen der dritten Position als eine Position korrelierend zu der Position, von welcher an ein Ausrollen des Fahrzeugs auf einer ebenen Straße das Fahrzeug auf die reduzierte Geschwindigkeit abbremsen würde, bevor die zweite Position erreicht wird.

9. Verfahren nach einem der Ansprüche 7 oder 8,
**gekennzeichnet durch** Mittel zum Festlegen, dass die dritte Position eine Position ist, die in einer festen Entfernung zur zweiten Position angeordnet ist.

10. Verfahren nach einem der Ansprüche 7 bis 9,
**gekennzeichnet durch** Mittel zum Festlegen, dass die dritte Position eine Position ist, die in einer Entfernung liegt, die zu der aktuellen Höchstgeschwindigkeit oder der aktuellen Geschwindigkeit des Fahrzeuges in Bezug steht.

11. Verfahren nach einem der Ansprüche 7 bis 10,
**gekennzeichnet durch** Mittel zum Festlegen, dass die dritte Position eine Position ist, die in einer Entfernung liegt, die zu einer bevorstehenden reduzierten Höchstgeschwindigkeit in Bezug steht.

12. Verfahren nach einem der Ansprüche 7 bis 11,
**dadurch gekennzeichnet, dass** die reduzierte Geschwindigkeit aus einer reduzierten Höchstgeschwindigkeit oder einer Straßenkrümmung oder einer versperrten Sicht resultiert.

13. Computerprogrammprodukt (110), das Computerprogrammabschnitte zum Ermöglichen einer automatischen Geschwindigkeitskontrolle für ein Kraftfahrzeug während eines Abbremsens umfasst, bei dem die Geschwindigkeit in Reaktion auf eine bevorstehende reduzierte Geschwindigkeit reduziert wird, welches bei der Abarbeitung auf einem Computer den Computer dazu veranlasst, einen Schritt des Ermittelns einer ersten Position auszuführen, an der ein Abbremsen zu initiieren ist, in Reaktion auf Straßenverhältnisse zwischen einer gegenwärtigen Position des Fahrzeugs und einer vorausliegenden zweiten Position, bei der eine geringere Geschwindigkeit einzustellen ist,
**dadurch gekennzeichnet, dass** das Computerprogrammprodukt weiterhin Computerprogrammabschnitte umfasst, um den Computer dazu zu veranlassen, den Schritt eines Wechselns der ersten Position auszuführen, an der ein Abbremsen initiiert wird, zu einer dritten Position, die näher an der zweiten Position liegt, wenn die erste Position von der zweiten Position weiter entfernt liegt, als eine vorbestimmte Entfernung.

14. Verfahren nach Anspruch 13,
**dadurch gekennzeichnet, dass** die dritte Position einer Position entspricht, korrelierend zu der Position, von welcher an ein Ausrollen des Fahrzeugs auf einer ebenen Straße das Fahrzeug auf die reduzierte Geschwindigkeit abbremsen würde, bevor die zweite Position erreicht wird.

15. Verfahren nach einem der Ansprüche 13 oder 14,
**dadurch gekennzeichnet, dass** die dritte Position eine Position ist, die in einer festen Entfernung zur zweiten Position liegt.

16. Verfahren nach einem der Ansprüche 13 bis 15,
**dadurch gekennzeichnet, dass** die dritte Position eine Position ist, die in einer Entfernung liegt, die zu der aktuellen Höchstgeschwindigkeit oder der aktuellen Geschwindigkeit des Fahrzeuges in Bezug steht.

17. Verfahren nach einem der Ansprüche 13 bis 16,
**dadurch gekennzeichnet, dass** die dritte Position eine Position ist, die in einer Entfernung liegt, die zu einer bevorstehenden reduzierten Höchstgeschwindigkeit in Bezug steht.

18. Verfahren nach einem der Ansprüche 13 bis 17,
**dadurch gekennzeichnet, dass** die reduzierte Geschwindigkeit aus einer reduzierten Höchstgeschwindigkeit oder einer Straßenkrümmung oder einer versperrten Sicht resultiert.

## Revendications

1. Procédé de commande de vitesse automatisée d'un véhicule à moteur pendant une décélération lorsque la vitesse est réduite en réponse à une vitesse réduite à venir, le procédé comprenant l'étape consistant à déterminer (203) une première position à laquelle lancer la décélération en réponse à des conditions de route entre une position actuelle du véhicule et une deuxième position en avant où une vitesse inférieure doit être appliquée, **caractérisé par** l'étape consistant à :
- changer (207) la première position où la décélération est lancée pour une troisième position plus près de la deuxième position si la première position est plus éloignée de la deuxième position qu'une distance prédéterminée.

2. Procédé selon la revendication 1, **caractérisé en ce que** la troisième position est une position correspondant à une position corrélée avec le moment où la marche en roue libre du véhicule sur une route plane devrait décélérer le véhicule à la vitesse réduite avant d'atteindre la deuxième position.

3. Procédé selon l'une quelconque des revendications 1 ou 2, **caractérisé en ce que** la troisième position est une position placée à une distance fixe de la deuxième position.

4. Procédé selon l'une quelconque des revendications 1 à 3, **caractérisé en ce que** la troisième position est une position placée à une distance se rapportant à la limite de vitesse actuelle ou à la vitesse du véhicule.

5. Procédé selon l'une quelconque des revendications 1 à 4, **caractérisé en ce que** la troisième position est une position placée à une distance se rapportant à la limite de vitesse réduite à venir.

6. Procédé selon l'une quelconque des revendications 1 à 5, **caractérisé en ce que** la vitesse réduite est due à une limite de vitesse réduite ou à une courbure de route ou à une vision bloquée.

7. Système (100) pour commande de vitesse automatisée d'un véhicule à moteur pendant une décélération, le système comprenant un moyen (101) destiné à déterminer une première position à laquelle lancer la décélération en réponse à des conditions de route entre une position actuelle du véhicule et une deuxième position en avant où une vitesse inférieure doit être appliquée, **caractérisé par** :
- un moyen (101) destiné à changer la première position à laquelle la décélération est lancée pour une troisième position plus près de la deuxième position si la première position est plus éloignée de la deuxième position qu'une distance prédéterminée.

8. Système selon la revendication 7, **caractérisé par** un moyen destiné à déterminer la troisième position en tant que position correspondant à une position corrélée avec un moment où la marche en roue libre du véhicule sur une route plane devrait décélérer le véhicule à la vitesse réduite avant d'atteindre la deuxième position.

9. Système selon l'une quelconque des revendications 7 ou 8, **caractérisé par** un moyen destiné à déterminer que la troisième position est une position placée à une distance fixe de la deuxième position.

10. Système selon l'une quelconque des revendications 7 à 9, **caractérisé par** un moyen destiné à déterminer que la troisième position est une position placée à une distance se rapportant à la limite de vitesse actuelle ou à la vitesse du véhicule.

11. Système selon l'une quelconque des revendications 7 à 10, **caractérisé par** un moyen destiné à déterminer que la troisième position est une position placée à une distance se rapportant à la limite de vitesse réduite à venir.

12. Système selon l'une quelconque des revendications 7 à 11, **caractérisé en ce que** la vitesse réduite est due à une limite de vitesse réduite ou à une courbure de route ou à une vue bloquée.

13. Produit-programme informatique (110) comprenant des segments de programme informatique destiné à permettre une commande de vitesse automatisée d'un véhicule à moteur pendant une décélération lorsque la vitesse est réduite en réponse à une vitesse réduite à venir qui, lorsque exécutée sur un ordinateur, amène l'ordinateur à exécuter l'étape consistant à déterminer une première position à laquelle lancer la décélération en réponse à des conditions de route entre une position actuelle du véhicule et une deuxième position en avant où une vitesse inférieure doit être appliquée,
**caractérisé en ce que** le produit-programme informatique comprend en outre des segments de programme informatique destinés à amener l'ordinateur à exécuter l'étape consistant à :
- changer la première position à laquelle la décélération est lancée pour une troisième position plus près de la deuxième position si la première position est plus éloignée de la deuxième position qu'une distance prédéterminée.

14. Produit-programme informatique selon la revendication 13, **caractérisé en ce que** la troisième position est une position correspondant à une position corrélée avec le moment où la marche en roue libre du véhicule sur une route plane devrait décélérer le véhicule à la vitesse réduite avant d'atteindre la deuxième position.

15. Produit-programme informatique selon l'une quelconque des revendications 13 ou 14, **caractérisé en ce que** la troisième position est une position placée à une distance fixe de la deuxième position.

16. Produit-programme informatique selon l'une quelconque des revendications 13 à 15, **caractérisé en ce que** la troisième position est une position placée à une distance se rapportant à la limite de vitesse actuelle ou à la vitesse du véhicule.

17. Produit-programme informatique selon l'une quelconque des revendications 13 à 16, **caractérisé en ce que** la troisième position est une position placée à une distance se rapportant à la limite de vitesse réduite à venir.

18. Produit-programme informatique selon l'une quelconque des revendications 13 à 17, **caractérisé en ce que** la vitesse réduite est due à une limite de vitesse réduite ou à une courbure de route ou à une vue bloquée.
